# EUROPEAN PATENT APPLICATION

(11) **EP 2 595 053 A1**
(43) Date of publication of application: **22.05.2013**
(21) Application number: 12154152.8
(22) Date of filing: 07.02.2012
(51) Int. Cl.: G06F 9/445

(54) **Method and system to enable pre-boot executable environment operating system install using switch in scalable direct attached storage environment**

(30) Priority: 16.11.2011 US 201113297995
(71) Applicant: LSI Corporation, Milpitas, CA 95035 (US)
(72) Inventor: Sihare, Ankit, 560071 Bangalore (IN); Bhatia, Rajiv, 560075 Bangalore (IN)
(74) Representative: Williams, David John

(57) **Abstract**

Disclosed is a system for installing operating system files on logical unit numbers (LUNs). At a SAS switch, a command to initiate an operating system installation on a LUN)associated with a SAS host bus adapter (HBA) connected to said SAS switch is received. In response to the command, a PXE session with a PXE server is established. Using the PXE session, operating system files are transferred to the LUN via the SAS switch thereby installing the operating system on said LUN.

## Description

### BACKGROUND OF THE INVENTION

Mass storage systems continue to provide increased storage capacities to satisfy user demands. Photo and movie storage, and photo and movie sharing are examples of applications that fuel the growth in demand for larger and larger storage systems.

A solution to these increasing demands is the use of arrays of multiple inexpensive disks. These arrays may be configured in ways that provide redundancy and error recovery without any loss of data. These arrays may also be configured to increase read and write performance by allowing data to be read or written simultaneously to multiple disk drives. These arrays may also be configured to allow "hot-swapping" which allows a failed disk to be replaced without interrupting the storage services of the array. Whether or not any redundancy is provided, these arrays are commonly referred to as redundant arrays of independent disks (or more commonly by the acronym RAID). The 1987 publication by David A. Patterson, et al., from the University of California at Berkeley titled "A Case for Redundant Arrays of Inexpensive Disks (RAID)" discusses the fundamental concepts and levels of RAID technology.

RAID storage systems typically utilize a controller that shields the user or host system from the details of managing the storage array. The controller makes the storage array appear as one or more disk drives (or volumes). This is accomplished in spite of the fact that the data (or redundant data) for a particular volume may be spread across multiple disk drives.

### SUMMARY OF THE INVENTION

An embodiment of the invention may therefore comprise a method of installing an operating system comprising: receiving, at a serial attached SCSI (SAS) switch, a command to initiate an operating system installation on a logical unit number (LUN) associated with a SAS host bus adapter (HBA) connected to said SAS switch; in response to said command, establishing a preboot executable (PXE) session between said SAS switch and a PXE server; and, transferring operating system files to said LUN via said SAS switch thereby installing said operating system on said LUN.

An embodiment of the invention may therefore further comprise a storage system comprising: a storage device associated with a logical unit number (LUN); a host bus adapter (HBA) connected to said storage device; a serial attached SCSI (SAS) switch connected to said HBA, said SAS switch receiving a command to initiate an operating system installation on said logical unit number (LUN) and, in response to said command, establishing a preboot executable (PXE) session between said SAS switch and a PXE server, and in response to said command transferring operating system files to said LUN via said SAS switch thereby installing said operating system on said LUN.

### BRIEF DESCRIPTION OF THE DRAWINGS

Figure 1 is a block diagram of a storage system.

Figure 2 is a block diagram of a storage system.

Figure 3 is a flowchart of a method of installing an operating system.

Figure 4 is a flowchart of a method of installing an operating system.

Figure 5 is a block diagram of a computer system.

### DETAILED DESCRIPTION OF THE EMBODIMENTS

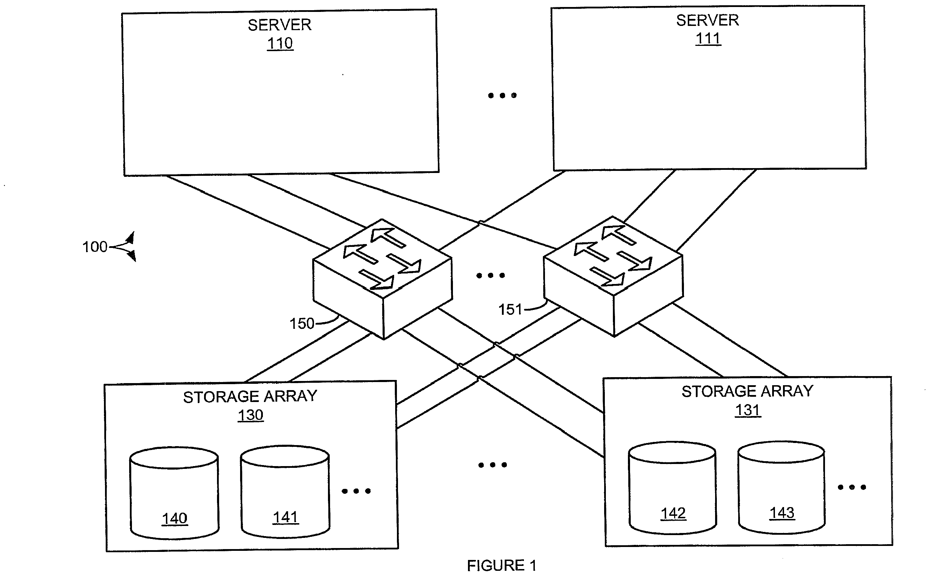

Figure 1 is a block diagram of a storage system. In Figure 1 storage system 100 comprises server 110, server 111, storage array 130, storage array 131, switch 150, and switch 151. Storage array 130 includes disk drives 140-141. Storage array 131 includes disk drives 142-143.

Server 110 is operatively coupled to switch 150 via one or more links. Server 110 may be operatively coupled to switch 151 one or more links. Switch 150 is operatively coupled to storage array 130 and storage array 131 via one or more links. Switch 151 is operatively coupled to storage array 130 and storage array 131 via one or more links. Thus, server 110 may exchange I/O data with storage array 130 and storage array 131 via switch 150 and (optionally) switch 151.

Server 111 is operatively coupled to switch 150 via one or more links. Server 111 may be operatively coupled to switch 151 one or more links. Thus, server 111 may exchange I/O data with storage array 130 and storage array 131 via switch 150 and (optionally) switch 151. In Figure 1, two servers 11-112 are shown, two switches 150-151 are shown, and two storage arrays are shown. However, this is merely exemplary. It should be understood that storage system 100 may have as little as one server, switch, or storage array. It should also be understood that storage system 100 may have more than two servers, switches, or storage array. In addition, the number of servers, switches, or storage arrays in storage system 100 need not match each other.

In an embodiment, the links shown in Figure 1 (and thus the switches 150-151) could be compatible with Fiber Channel, high speed Ethernet network interfaces, InfiniBand, or Serial Attached SCSI (SAS). Storage arrays 130 and 130-131 may have dual or multiple controllers (or data process units) for high availability. Each controller may have multiple target I/O ports to provide high I/O bandwidth.

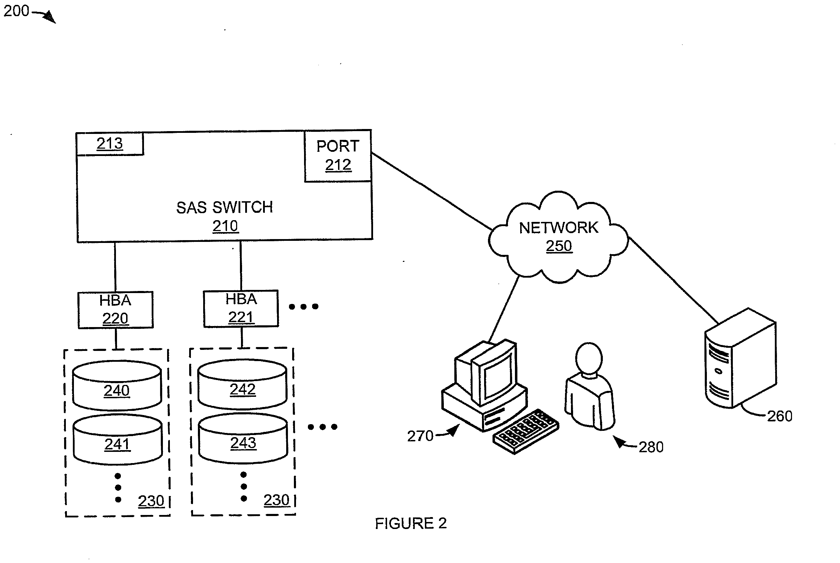

As can be seen in Figure 1, storage system 100 is configured as a direct-attached storage (DAS) environment. Switches 150-151 may extend the capabilities of a DAS environment by allowing multiple servers 110-111 to connect to one or more independent storage arrays 130-131. Additionally, switches 150-151 may have built-in zoning capabilities that allow storage system 100 to securely share only selected storage resources. The functions of switch 150 and switch 151 will now be described in further detail with reference to Figure 2. Switch 150 and switch 151 correspond to switch 210 in Figure 2 and have the same functionality. However, for the sake of brevity, some elements of Figure 1 have been left out of Figure 2.

Figure 2 is a block diagram of a storage system. In Figure 2, storage system 200 comprises: serial attached SCSI (small computer system interface) switch 210 (a.k.a., SAS switch 210), host bus adapter (HBA) 220, HBA 221, enclosure 230, enclosure 231, network 250, preboot executable (PXE) server 260, computer 270, and user 280. SAS switch 210 includes network port 212 and firmware 213. Enclosure 230 includes at least disk drives 240-241. Enclosure 231 includes at least disk drives 242-243. Enclosures 230-231 may also include more disk drives. However, these are omitted from Figure 2 for the sake of brevity. Likewise, storage system 200 may include additional HBAs and enclosures. These are also omitted from Figure 2 for the sake of brevity. It should be understood that SAS switch 210, HBAs 220-221, and enclosures 230-231 may comprise or be referred to as a direct attached storage (DAS) system.

SAS switch 210 is operatively coupled to HBA 220 and HBA 221. HBA 220 and HBA 221 are operatively coupled to enclosure 230 and enclosure 231, respectively. SAS switch 210 is operatively coupled to network 250 via port 212. Thus, data for disk drives 240-243 may be sent to/from network 250 via HBAs 220-221 and SAS switch 210. Network 250 is also operatively coupled to PXE server 260 and computer 270. Data and files for disk drives 240-243 may come from PXE server 260 via network 250. Computer 270 may be controlled or receive commands from user 280.

Network 250 may be any network or collection of networks that couple, link, or otherwise operatively connect PXE server 260, computer 270, and SAS switch 210 with each other or other devices or systems. Network 250 may include other secondary data networks. In an example, network 250 may include the Internet, a backhaul network, a local network, a long distance network, or a packet network, or any combination thereof, as well as other types of networks.

Host bus adapters 220-221 (a.k.a., host controller or host adapter) connect a host system (a computer-not shown in Figure 2) to SAS switch 210 and storage devices in enclosures 230-231. HBAs 220-221 bridge the physical, logical, and protocol differences between the host computer's internal bus and external SAS communication link(s). HBAs 220-221 may contain all the electronics and firmware required to execute transactions on the external SAS communication link(s).

In an embodiment, SAS switch 210 may be managed and configured via port 212. SAS switch 210 may be managed and configured in response to input from user 280 that is sent to SAS switch 210 via computer 270 and network 250. SAS switch 210 may include firmware 213 that implements a TCP/IP stack. This enables SAS switch 210 to process simple network management protocol (SNMP) packets and commands.

In an embodiment, firmware 213 may also implement PXE functionality. PXE is an environment to boot devices, such as SAS switch 210, using a network port 212 independently of data storage devices (like disk drives 240-243) or installed operating systems. PXE is described in the Preboot Execution Environment (PXE) specification (version 2.1) which is hereby incorporated herein by reference. The Preboot Execution Environment (PXE) specification (version 2.1) is available at ftp://download.intel.com/design/archives/wfm/downloads/pxespec.pdf. PXE makes use of several network protocols like Internet Protocol (IP), User Datagram Protocol (UDP), Dynamic Host Configuration Protocol (DHCP) and Trivial File Transfer Protocol (TFTP). A PXE client (the device to be bootstrapped via PXE) has a set of predefined PXE specific Application Programming Interfaces (APIs).

The PXE functionality on SAS switch 210 may be used to install operating systems on one or more of disk drives 240-243. The installation of an operating system may be initiated by a management program running on computer 270. The installation of an operating system may be initiated by a management program running on computer 270 in response to input from user 280. The input from user 280 may specify which logical unit numbers (LUNs) associated with one or more of HBAs 220-221 are to be the target of PXE operating system install.

In other words, while interacting with management software for SAS switch 210, user 280 may initiate an operating system install for a specific host LUN connected to SAS switch 210. User 280 may select the attached SAS HBAs 220-221 from a list displayed by the management software. The list displayed by the management software may be created and maintained by the management software using SAS discovery procedures and/or mechanisms. An indicator of the user's selection of one or more LUNs from the list may be sent to SAS switch 210. Each HBA 220-221 may appear to PXE server 260 as a boot LUN. As part of the PXE operating system install, TFTP protocol packets may be exchanged between PXE server 260 and SAS switch 210 (under the control of firmware 213). In an embodiment, firmware 213 controls SAS switch 210 to translate PXE packets into SCSI data frames (and vice versa). These SCSI data frames may be communicated to/from HBAs 220-221 and/or disk drives 240-243. Firmware 213 may control SAS switch 210 to translate PXE packets into SCSI data frames (and vice versa) by removing (or adding) Ethernet headers from the packets. These SCSI data frames may be sent to the specified host LUN. These SCSI data frames may be sent to the specified host LUN in order to install operating system files on the specified LUN(s).

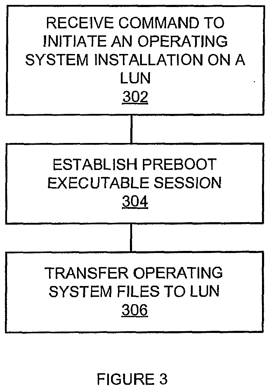

Figure 3 is a flowchart of a method of installing an operating system. The steps illustrated in Figure 3 may be performed by one or more of the elements of storage system 100 and/or storage system 200. A command to initiate an operating system installation on a LUN is received (302). For example, user 280 may command management software running on computer 270 to install an operating system on a LUN associated with an HBA 220. In another example SAS switch 210 receives a command or indicator from computer 270 to initiate an operating system installation on a LUN.

A preboot executable session is established (304). For example, firmware 213 running on SAS switch 210 may control SAS switch 210 to initiate a PXE bootstrap session by broadcasting a DHCPDISCOVER packet extended with PXE-specific options (extended DHCPDISCOVER) via port 212 to port 67/UDP (DHCP server port). PXE server 260 may receive this extended DHCPREQUEST. In response, PXE server 260 may respond to SAS switch 210 with the complete file path to download the operating system via TFTP. SAS switch 210 may then establish a TFTP session with PXE server 260.

Operating system files are transferred to LUN (306). For example, the TFTP session established in block 204 may be used to transfer the operating system to be installed on the specified LUN from PXE server 260 to the specified LUN. To install the operating system on the specified LUN, SAS switch 210 may translate PXE packets into SCSI data frames (and vice versa). These SCSI data frames may be communicated to/from HBAs 220-221 and/or disk drives 240-243. SAS switch 210 may translate PXE packets into SCSI data frames (and vice versa) by removing (or adding) Ethernet headers from the packets.

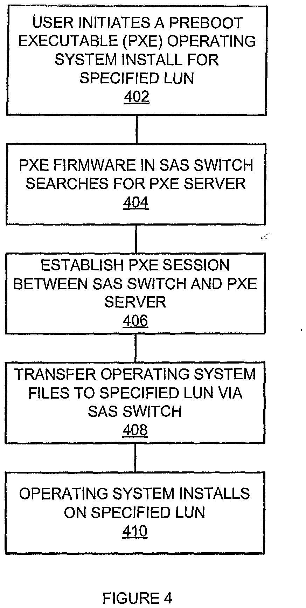

Figure 4 is a flowchart of a method of installing an operating system. The steps illustrated in Figure 4 may be performed by one or more of the elements of storage system 100 and/or storage system 200. A user initiates a preboot executable (PXE) operating system install for a specified LUN (402). For example, user 280 may initiate an operating system install on a specified LUN attached to SAS switch 210. An indicator of this selection may be sent to SAS switch 210. In response to user 280's selection of a LUN, management software running on computer 270 may communicate with firmware 213 to cause SAS switch 210 to start the process of installing an operating system on the specified LUN using PXE protocols and messaging.

PXE firmware in a SAS switch searches for a PXE server (404). For example, firmware 213 in SAS switch 210 may search for PXE server 260. Firmware 213 in SAS switch 210 may search for PXE server 260 by broadcasting a DHCPDISCOVER packet extended with PXE-specific options. A PXE session is established between SAS switch and a PXE server (406). For example, SAS switch 210 and PXE server 260 may establish a PXE TFTP session. SAS switch 210 and PXE server 260 may establish a PXE TFTP session after PXE server 260 responds to SAS switch 210's broadcast DHCPDISCOVER packet. PXE server 260 may respond to SAS switch 210's DHCPDISCOVER packet with a complete file path to download the operating system. SAS switch 210 may then use this complete file path to request the operating system files be transferred from PXE server 260 to SAS switch 210 using TFTP protocol packets.

Operating system files are transferred to the specified LUN via the SAS switch (408). For example, SAS switch 210 may transfer the operating system files SAS switch 210 receives via the TFTP protocol to the specified LUN. SAS switch 210 may translate TFTP packets (PXE packets) into SCSI data frames (and vice versa). These SCSI data frames may be communicated to/from HBAs 220-221 and/or disk drives 240-243. SAS switch 210 may translate TFTP packets into SCSI data frames (and vice versa) by removing (or adding) Ethernet headers from the packets.

Operating system installs on the specified LUN (410). For example, HBA 220-221, or the host system may extract or decompress various files stored on the specified LUN by SAS switch 210 in order to create a fully working installation of the operating system on the specified LUN.

The methods, systems, networks, devices, equipment, and functions described above may be implemented with or executed by one or more computer systems. The methods described above may also be stored on a computer readable medium. Many of the elements of storage system 100 and storage system 200, may be, comprise, or include computers systems. This includes, but is not limited to servers 110-111, SAS switches 150-151, storage arrays 130-131, SAS switch 210, HBA 220, HBA 221, enclosure 230, enclosure 231, network 250, PXE server 260, and computer 270.

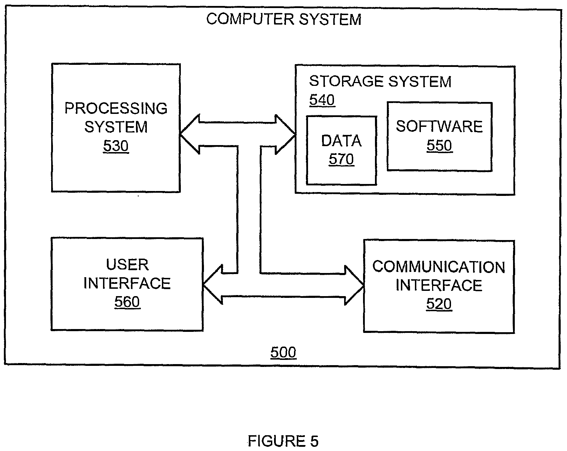

Figure 5 illustrates a block diagram of a computer system. Computer system 500 includes communication interface 520, processing system 530, storage system 540, and user interface 560. Processing system 530 is operatively coupled to storage system 540. Storage system 540 stores software 550 and data 570. Processing system 530 is operatively coupled to communication interface 520 and user interface 560. Computer system 500 may comprise a programmed general-purpose computer. Computer system 500 may include a microprocessor. Computer system 500 may comprise programmable or special purpose circuitry. Computer system 500 may be distributed among multiple devices, processors, storage, and/or interfaces that together comprise elements 520-570.

Communication interface 520 may comprise a network interface, modem, port, bus, link, transceiver, or other communication device. Communication interface 520 may be distributed among multiple communication devices. Processing system 530 may comprise a microprocessor, microcontroller, logic circuit, or other processing device. Processing system 530 may be distributed among multiple processing devices. User interface 560 may comprise a keyboard, mouse, voice recognition interface, microphone and speakers, graphical display, touch screen, or other type of user interface device. User interface 560 may be distributed among multiple interface devices. Storage system 540 may comprise a disk, tape, integrated circuit, RAM, ROM, network storage, server, or other memory function. Storage system 540 may be a computer readable medium. Storage system 540 may be distributed among multiple memory devices.

Processing system 530 retrieves and executes software 550 from storage system 540. Processing system 530 may retrieve and store data 570. Processing system 530 may also retrieve and store data via communication interface 520. Processing system 530 may create or modify software 550 or data 570 to achieve a tangible result. Processing system 530 may control communication interface 520 or user interface 560 to achieve a tangible result. Processing system may retrieve and execute remotely stored software via communication interface 520.

Software 550 and remotely stored software may comprise an operating system, utilities, drivers, networking software, and other software typically executed by a computer system. Software 550 may comprise an application program, applet, firmware, or other form of machine-readable processing instructions typically executed by a computer system. When executed by processing system 530, software 550 or remotely stored software may direct computer system 500 to operate as described herein.

The foregoing description of the invention has been presented for purposes of illustration and description. It is not intended to be exhaustive or to limit the invention to the precise form disclosed, and other modifications and variations may be possible in light of the above teachings. The embodiment was chosen and described in order to best explain the principles of the invention and its practical application to thereby enable others skilled in the art to best utilize the invention in various embodiments and various modifications as are suited to the particular use contemplated. It is intended that the appended claims be construed to include other alternative embodiments of the invention except insofar as limited by the prior art.

## Claims

1. A method of installing an operating system comprising:
receiving, at a serial attached SCSI (SAS) switch, a command to initiate an operating system installation on a logical unit number (LUN) associated with a SAS host bus adapter (HBA) connected to said SAS switch;
in response to said command, establishing a preboot executable (PXE) session between said SAS switch and a PXE server; and,
transferring operating system files to said LUN via said SAS switch thereby installing said operating system on said LUN.

2. The method of claim 1, further comprising:
receiving PXE packets from said PXE server.

3. The method of claim 2, further comprising:
translating said PXE packets into SCSI data frames.

4. The method of claim 3, further comprising:
sending said SCSI data frames to said LUN.

5. The method of claim 1, further comprising:
maintaining a list of LLlNs associated with said SAS switch.

6. The method of claim 5, further comprising:
receiving an indicator of a user selection of said LUN from said list ofLUNs.

7. A storage system comprising:
a storage device associated with a logical unit number (LUN);
a host bus adapter (HBA) connected to said storage device; and,
a serial attached SCSI (SAS) switch connected to said HBA, said SAS switch receiving a command to initiate an operating system installation on said logical unit number (LUN) and, in response to said command, establishing a preboot executable (PXE) session between said SAS switch and a PXE server, and in response to said command transferring operating system files to said LUN via said SAS switch thereby installing said operating system on said LUN.

8. The storage system of claim 7, wherein said SAS switch receives PXE packets from said PXE server.

9. The storage system of claim 8, wherein said SAS switch translates said PXE packets into SCSI data frames.

10. The storage system of claim 9, wherein said SAS switch sends said SCSI data frames to said LUN.

11. The storage system of claim 7, wherein said SAS switch maintains a list ofLUNs connected to said SAS switch.

12. The method of claim 11, wherein said SAS switch receives an indicator of a user selection of said LUN from said list ofLUNs.

13. A non-transitory computer readable medium having instructions stored thereon for installing an operating system that, when executed by a computer, at least instruct the computer to:
receive, at a serial attached SCSI (SAS) switch, a command to initiate an operating system installation on a logical unit number (LUN) associated with a SAS host bus adapter (HBA) connected to said SAS switch;
in response to said command, establish a preboot executable (PXE) session between said SAS switch and a PXE server; and,
transfer operating system files to said LUN via said SAS switch thereby installing said operating system on said LUN.

14. The non-transitory computer readable medium of claim 13, wherein the computer is further instructed to perform at least one of:
receive PXE packets from said PXE server;
translate said PXE packets into SCSI data frames;
send said SCSI data frames to said LUN;
maintain a list of LUNs associated with said SAS switch; or
receive an indicator of a user selection of said LUN from said list of LUNs.
